# EUROPÄISCHE PATENTANMELDUNG

(11) **EP 1 716 734 A2**
(43) Veröffentlichungstag der Anmeldung: **02.11.2006**
(21) Anmeldenummer: 06008478.7
(22) Anmeldetag: 25.04.2006
(51) Int. Cl.: A01D 34/66, A01D 34/84

(54) **Randschneidevorrichtung und Rasenmäher mit Randschneidevorrichtung**

(30) Priorität: 25.04.2005 DE 202005006666 U; 06.06.2005 DE 202005008910 U
(71) Anmelder: IDEEMATEC Deutschland GmbH, 94574 Wallerfing (DE)
(72) Erfinder: Kufner, Johann, 94527 Aholming/Tabertshausen (DE)

(57) **Zusammenfassung**

Rasenmäher mit einer Randschneidevorrichtung (1),wobei zwischen dem Antriebsmotor und dem Messer des Rasenmähers auf der Antriebswelle (9) des Rasenmähermotors eine Antriebsscheibe (7) befestigt ist. Über diese Antriebsscheibe (7) sowie eine Antriebsrolle (2) wird mittels eines Antriebsriemens (8) die Randschneidevorrichtung (1) angetrieben. Diese Randschneidevorrichtung ist am Rasenmäher an einem schwenkbar gelagerten Bügel (14;15;19) so angebracht, daß beim Schwenken der Randschneidevorrichtung (1) dieselbe die gesamte Breite vor der Frontschürze (3) des Rasenmähers abfährt und den Rasen vor dem Rasenmäher und an den Seiten vor dem linken bzw. rechten Vorderrad des Rasenmähers abmäht.

## Beschreibung

Beim Rasenmähen ist es ein bekanntes Problem, dass man auf Grund der Lage des Schneidemessers, das unter dem Gehäuse des Rasenmähers in gewissem Abstand zu den Rädern angebracht ist, bestimmte Stellen eines Rasens nicht schneiden kann: Dazu gehören vor Allem durch Umfassungen begrenzte Ränder des Rasens. Man kann den Rasenmäher auf Grund seines im Gehäuse liegenden Messers einfach nicht nahe genug an eine begrenzendes Hindernis heranfahren, um die Schneide über den Rasen am Hindernis zu bringen.

Der Erfindung lag also das Problem zu Grunde, eine Randschneidevorrichtung für Rasenmäher zu bauen, die das oben genannte Problem löst. Dazu sollte ein eine Randschneidevorrichtung für Rasenmäher entstehen,
- die dadurch gekennzeichnet ist, dass sie die Rasenränder und den Rasen vor dem Rasenmäher an begrenzenden Hindernissen bis ans Hindernis hin exakt schneidet und dabei schwenkbar ist, so dass die Randschneidevorrichtung die ganze Breite des Rasenmähers abmähen kann, ohne den Rasenmäher umsetzen zu müssen.
- die dadurch gekennzeichnet ist, dass sie zum Abmähen von linken bzw. rechten Rasenkanten in Fahrtrichtung so schwenkbar ist, dass die Randschneidevorrichtung etwas über die Linie, die von der Außenseite der Räder des Rasenmähers links bzw. rechts gebildet wird, hinaus den Rasen schneidet.
- die dadurch gekennzeichnet ist, dass beim normalen Mähvorgang keine Gefahr für Personen in der Nähe entstehen kann
- die dadurch gekennzeichnet ist, dass sie mit dem Antrieb des Rasenmähers mitläuft und nach Gebrauch von diesem Antrieb getrennt wird um Energie zu sparen und den Geräuschpegel niedrig zu halten

Als geeignete Technik zum exakten Mähen an einem Hindernis erscheint der Vorbau einer Randschneidevorrichtung an einen Standardrasenmäher geeignet. Diese Ausführungsform ist aus der Offenlegungschrift DE 7835939 vom 4.12.78 vorbekannt. Die dort beschriebene Vorrichtung wird auf eine mit dem Rasenmäherantrieb fest verbundene Welle gesetzt. Damit ist eine Trennung vom Antrieb des Rasenmähers nur durch Abnehmen der Vorrichtung möglich. Zudem ist die Vorrichtung nur abnehmbar aber nicht einklappbar. Aus der US-Patentschrift Nr. US6094896 vom 1.8.2000 ist eine Trennung des Rasenmähers vom Antrieb durch eine Vorrichtung bekannt, die einen Antriebsriemen durch Verkürzen des Abstandes zwischen Antriebsrad und Randschneidevorrichtung entspannt und somit leer laufen lässt. Der Nachteil der dort beschriebene Vorrichtung besteht jedoch in dem ungünstigen Übersetzungsverhältnis von 1:1 zwischen Rasenmähermotor und Randschneidevorrichtung. Zudem wird sie über ein mechanisches Hebelwerk getrennt. Dies ist produktionstechnisch nur mit hohen Kosten verbunden zu realisieren.

Die über den Stand der Technik hinausgehende Erfindung besteht in folgenden Merkmalen:
- In einer neuartigen Vorrichtung, die über einen Antriebsriemen derart mit dem Rasenmäherantrieb verbunden ist, dass sie jederzeit durch einfache Bautenzüge bzw. Betätigungshebel vom Mäherantrieb getrennt werden kann
- In einem Antriebsriemenantrieb, der eine hohe Übersetzung und damit eine hohe Drehzahl der Randschneidevorrichtung gewährleistet. Damit können sogenannte Trimmer mit Nylonfäden als Schneidewerkzeug zum Einsatz kommen.
- In einer Randschneidevorrichtung, die nach Benutzung sicher in die Frontschürze des Rasenmähers zurückgezogen werden kann
- In einer Randschneidevorrichtung, die über die volle Breite des Rasenmähers schneiden kann und nicht wie bei dem vorbekannten Stand der Technik nur auf die Breite des Schneidwerks des Trimmers festgelegt ist. Damit kann sie den Rasen an Hindernisse vor dem Rasenmäher über die volle Breite des Rasenmähers schneiden, ohne dass der Rasenmäher umgesetzt werden muss
- In einer Randschneidevorrichtung die linke und rechte Kanten in Fahrtrichtung des Rasenmähers schneiden kann, dadurch dass die Randschneidevorrichtung so weit links oder rechts ausgeschwenkt werden kann, dass sie über die Linie der Räder des Rasenmähers hinausschneiden kann.

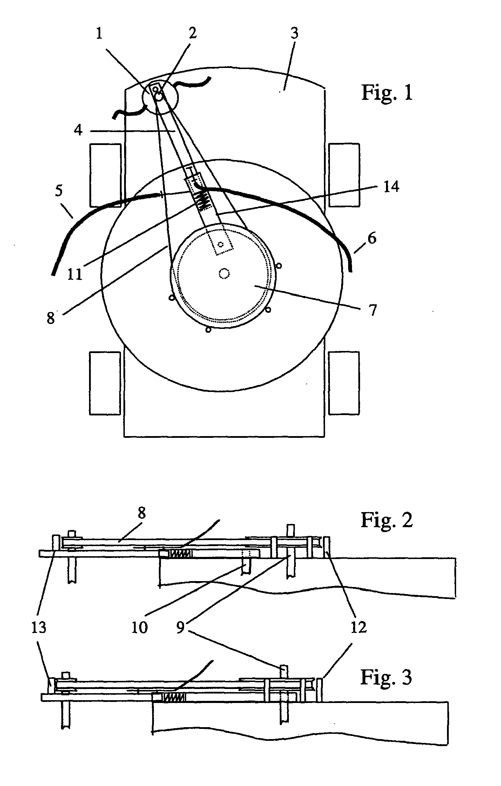

Funktionsweise des Gerätes am Beispiel der Ausführung 1 gemäß Anspruch 1 (Fig. 1) :
Beispiel 1: Der Rasenmäher fährt auf ein Hindernis zu. Der Rasen am Fuße des Hindernisses soll geschnitten werden.
   1. Boudenzug (6) wird nach vorne geschoben. Dadurch fährt die Randschneidevorrichtung (1) auf Grund der Druckkraft der Feder (11) nach vorne und schaut unter der Schürze (3) des Rasenmähers etwas vor
   2. Gleichzeitig wird durch das Vorfahren der Randschneideeinrichtung (1) der Antriebsriemen (8) gespannt , so dass sich die Randschneidevorrichtung (1) mit maximaler Drehzahl dreht.
   3. Nun wird der Rasen geschnitten. Durch mehrfaches Betätigen des Boudenzuges (5) kann nun eine Schwenkbewegung von links nach rechts durchgeführt werden, so dass die ganze Breite vor der Schürze (3) des Rasenmähers abgemäht wird.
   4. Wenn der Rasen gemäht ist, wird die Randschneidevorrichtung (1) durch Anziehen des Boudenzuges (6) wieder eingefahren und dabei der Antriebsriemen (8) entspannt, so dass die Randschneidevorrichtung (1) aufhört zu arbeiten.
Beispiel 2: Der Rasenmäher fährt an einer Rasenkante entlang, die links von einer kleinen Mauer begrenzt ist. Der Rasen soll entlang der Kante geschnitten werden:
   1. Boudenzug (6) wird nach vorne geschoben. Dadurch fährt die Randschneidevorrichtung (1) auf Grund der Druckkraft der Feder (11) nach vorne und schaut unter der Schürze (3) des Rasenmähers etwas vor
   2. Gleichzeitig wird durch das Vorfahren der Randschneideeinrichtung (1) der Antriebsriemen (8) gespannt , so dass sich die Randschneidevorrichtung mit maximaler Drehzahl dreht.
   3. Nun wird der Rasen geschnitten. Durch Betätigen des Boudenzuges (5) kann nun eine Schwenkbewegung nach links nach durchgeführt werden, so dass die Randschneidevorrichtung (1) in der ganz linken Position zu stehen kommt und den Rasen links bis knapp über die Räder hinaus mäht.
   4. Wenn der Rasen gemäht ist, wird die Randschneidevorrichtung (1) durch Anziehen des Boudenzuges (6) wieder eingefahren und dabei der Antriebsriemen (8) entspannt, so dass die Randschneidevorrichtung (1) aufhört zu arbeiten.

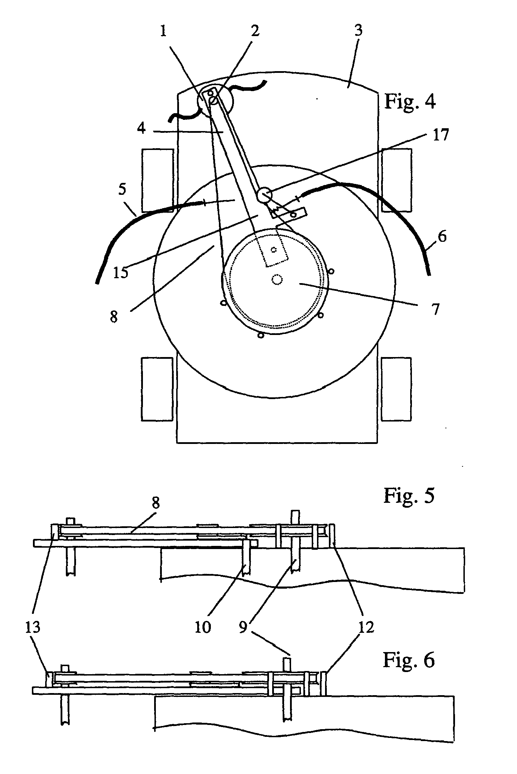

Fig. 1-6 zeigen 4 Ausführungsbeispiele der Erfindung gemäß Anspruch 1:

Es zeigen:
Fig. 1: Ausführungsbeispiel: Randschneidevorrichtung mittels Teleskoparm zurückziehbar und schwenkbar mit Lagerung des schwenkbaren Bügels (14) vor der Antriebswelle (9) am Rasenmähergehäuse in Draufsicht in Draufsicht
Fig. 2: Ausführungsbeispiel: Randschneidevorrichtung mittels Teleskoparm zurückziehbar und schwenkbar mit Lagerung des schwenkbaren Bügels (14) vor Antriebswelle (9) am Rasenmähergehäuse in Seitenansicht als Ausschnitt
Fig. 3: Ausführungsbeispiel: Randschneidevorrichtung mittels Teleskoparm zurückziehbar und schwenkbar mit Lagerung des schwenkbaren Bügels (14) auf der Antriebswelle (9) in Seitenansicht als Ausschnitt
Fig. 4: Ausführungsbeispiel: Randschneidevorrichtung mit Keilriemenspannung über Andruckrolle (17) schwenkbar mit Lagerung des schwenkbaren Bügels (15) vor der Antriebswelle (9) in Draufsicht
Fig. 5: Ausführungsbeispiel: Randschneidevorrichtung mit Keilriemenspannung über Andruckrolle (17) schwenkbar mit Lagerung des schwenkbaren Bügels (15) vor der Antriebswelle (9) am Rasenmähergehäuse in Seitenansicht als Ausschnitt Fig. 6: Ausführungsbeispiel: Randschneidevorrichtung mit Keilriemenspannung über Andruckrolle (17) schwenkbar mit Lagerung des schwenkbaren Bügels (15) auf der Antriebswelle (9) in Seitenansicht als Ausschnitt

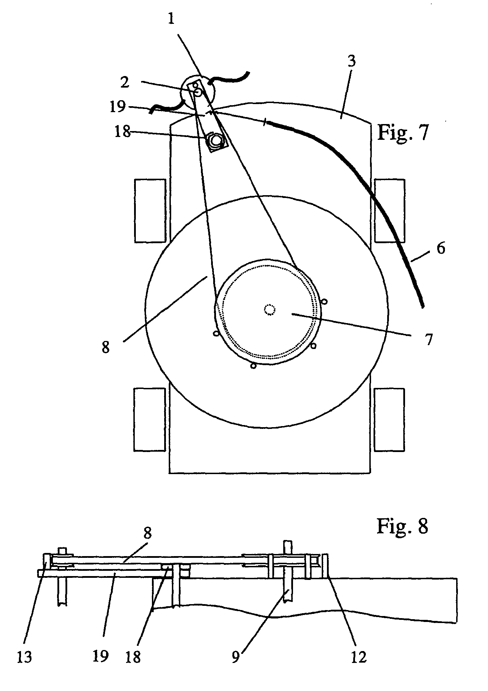

Fig.7: Ausführungsbeispiel: Randschneidevorrichtung mit Keilriemenspannung durch schwenkbaren Bügel mit Lagerung des schwenkbaren Bügels (19) vor der Antriebswelle (9) am Rasenmähergehäuse in Draufsicht
Fig. 8: Ausführungsbeispiel: Randschneidevorrichtung mit Keilriemenspannung durch schwenkbaren Bügel mit Lagerung des schwenkbaren Bügels (19) vor der Antriebswelle (9) am Rasenmähergehäuse in Seitenansicht als Ausschnitt

## Patentansprüche

1. Randschneidevorrichtung (1) **gekennzeichnet durch** eine zwischen dem Antriebsmotor und dem Messer des Rasenmähers auf der Antriebswelle (9) des Rasenmähermotors befestigte Antriebsscheibe (7) und eine über einen **durch** diese Antriebsscheibe (7) mittels eines Antriebsriemens (8) über eine Antriebsrolle (2) angetriebene Randschneidevorrichtung (1), die am Rasenmäher an einem schwenkbar gelagerten Bügel (Ziff. 19;15;14) so angebracht ist, dass beim Schwenken der Randschneidevorrichtung (1) dieselbe die gesamte Breite vor der Frontschürze des Rasenmähers abfährt und den Rasen vor dem Rasenmäher und an den Seiten vor dem linken bzw. rechten Vorderrad des Rasenmähers abmäht.

2. Der Rasenmäher mit montierter Randschneidevorrichtung gemäß Anspruch 1 ist **dadurch gekennzeichnet, dass** er über eine gegenüber einem Standardrasenmäher verlängerte Frontschürze (3) verfügt, um der Randschneidevorrichtung (1) Platz unter dem Gehäuse (3) zu bieten

3. Die Randschneidevorrichtung (1) gemäß Anspruch 1 ist **dadurch gekennzeichnet, dass** die Antriebsscheibe (7) stets einen wesentlich größeren Durchmesser als die Antriebsrolle (2) hat und dass die Randschneidevorrichtung (1) auf Grund der durch die verschiedenen Durchmesser gegebenen hohen Übersetzung mit sehr viel höherer Drehzahl als die Welle (9) des Schneidwerks des Rasenmäher läuft und somit unter Anderem den Betrieb eines Trimmers mit Nylonfäden als Schneidwerkzeug erlaubt.

4. Die Randschneidevorrichtung (1) gemäß Anspruch 1 ist **dadurch gekennzeichnet, dass** sie auf Grund der Lagerung (10) so weit geschwenkt werden kann, dass sie in linker bzw. in rechter Position etwas über die von den Rädern des Rasenmähers jeweils gebildete Linie hinausmähen kann und damit bei Geradeausfahrt des Rasenmähers rechte bzw. linke Rasenkanten abmähen kann.

5. Die Randschneidevorrichtung (1) gemäß Anspruch 1 ist **dadurch gekennzeichnet, dass** der Antriebsriemen (8) per Boudenzug (6) oder per Betätigungshebel entspannt und gespannt werden kann. In gespanntem Zustand dreht sich die Randschneidevorrichtung (1) und in entspanntem Zustand hört sie auf sich zu drehen, da der Antriebsriemen (8) von der Antriebsscheibe (7) nicht mehr angetrieben wird.

6. Die Randschneidevorrichtung (1) gemäß Anspruch 1 ist **dadurch gekennzeichnet, dass** sie mit verschiedenen Schneidwerkzeugen bestückt werden kann.

7. Die Randschneidevorrichtung (1) gemäß Anspruch 6 und mehreren Ansprüchen ist **dadurch gekennzeichnet, dass** das Schneidewerkzeug selbst aus einem sogenannten Trimmer besteht, der das Gras mittels Kunststofffäden schneidet, die auf einer sich mit hoher Geschwindigkeit drehenden Welle montiert sind.

8. Die Randschneidevorrichtung (1) gemäß Anspruch 6 und mehreren Ansprüchen ist **dadurch gekennzeichnet, dass** das Schneidewerkzeug selbst aus einem sogenannten Balkenmäher besteht.

9. Die Randschneidevorrichtung (1) gemäß Anspruch 6 und mehreren Ansprüchen ist **dadurch gekennzeichnet, dass** das Schneidewerkzeug selbst aus einer rotierenden Schneide besteht.

10. Die Randschneidevorrichtung (1) gemäß Anspruch 5 ist **dadurch gekennzeichnet, dass** es verschiedene Ausführungen zum Spannen bzw. Entspannen des Antriebsriemens (8) gibt.

11. Die Randschneidevorrichtung (1) gemäß Anspruch 10 und mehreren Ansprüchen ist **dadurch gekennzeichnet, dass** Spannung bzw. Entspannung des Antriebsriemens durch eine Andruckrolle (17) bewirkt wird, die mit einer Feder (4) stets gegen den Antriebsriemen (8) gedrückt wird. Dies ist in Ausführungsbeispielen gemäß Fig. 4,5 und 6 gezeigt. Mittels Boudenzug (6) oder Betätigungshebel kann die Andruckrolle (17) gegen ihre Feder (4) zurückgezogen werden, so dass sich der Antriebsriemen (8) entspannt.

12. Die Randschneidevorrichtung (1) gemäß Anspruch 10 und mehreren Ansprüchen ist **dadurch gekennzeichnet, dass** Spannung bzw. Entspannung des Antriebsriemens (8) durch eine in einer Teleskopstange (14) gelagerte Feder (11) bewirkt wird, die beiden oder mehreren Teile der Teleskopstange (14) stets voneinander wegdrückt und damit den Antriebsriemen (8) spannt. Dies ist in Ausführungsbeispielen gemäß Fig. 1,2 und 3 gezeigt. Mittels Boudenzug (6) oder Betätigungshebel kann der vordere Teil der Teleskopstange (14) gegen die Rückstellfeder zurückgezogen werden, so dass sich der Antriebsriemen (8) entspannt.

13. Die Randschneidevorrichtung (1) gemäß Anspruch 12 und mehreren Ansprüchen ist **dadurch gekennzeichnet, dass** beim Entspannen des Antriebsriemens (8) durch Anziehen des Boudenzuges (6) oder eines Betätigungshebels die Teleskopstange die Randschneidevorrichtung (1) unter die Schürze (3) des Rasenmähers zurückzieht.

14. Die Randschneidevorrichtung (1) gemäß Anspruch 10 und mehreren Ansprüchen ist **dadurch gekennzeichnet, dass** Spannen und Entspannen des Antriebsriemens (8) durch den an der Frontschürze schwenkbar gelagerten und mit einer Rückstellfeder (18) versehen Bügel (19) bewirkt wird, der beim Anziehen des Boudenzuges die Randschneidevorrichtung (1) unter die Schürze des Rasenmähers zurückzieht und gleichzeitig den Antriebsriemen entspannt. Dies ist in einem Ausführungsbeispielen gemäß Fig. 7 und 8 gezeigt.

15. Die Randschneidevorrichtung (1) gemäß Anspruch 1 und mehreren Ansprüchen ist **dadurch gekennzeichnet, dass** der Befestigungsbügel schwenkbar am Gehäuse (10) des Rasenmähers gelagert ist. Dies ist in Ausführungsbeispielen gemäß Fig.2,5 und 8 gezeigt.

16. Die Randschneidevorrichtung (1) gemäß Anspruch 1 und mehreren Ansprüchen ist **dadurch gekennzeichnet, dass** der Befestigungsbügel schwenkbar auf der Antriebswelle (9) des Rasenmähers gelagert ist. Dies ist in Ausführungsbeispielen gemäß Fig.3 und 6 gezeigt.

17. Die Randschneidevorrichtung (1) gemäß Anspruch 1 und mehreren Ansprüchen ist **dadurch gekennzeichnet, dass** der Antriebsriemen (8) durch ein oder mehrere in kurzem Abstand zur Antriebsscheibe (7) angebrachte Sicherungsbolzen (12) so gesichert wird, dass er nicht aus seiner Führung herausspringen kann.

18. Die Randschneidevorrichtung (1) gemäß Anspruch 1 und mehreren Ansprüchen ist **dadurch gekennzeichnet, dass** der Antriebsriemen (8) durch ein oder mehrere in kurzem Abstand zur Antriebsrolle (2) angebrachte Sicherungsbolzen (13) so gesichert wird, dass er nicht aus seiner Führung herausspringen kann.

19. Die Randschneidevorrichtung (1) gemäß Anspruch 1 ist **dadurch gekennzeichnet, dass** der Antriebsriemen (8) als Keilriemen ausgeführt ist.

20. Die Randschneidevorrichtung (1) gemäß Anspruch 1 ist **dadurch gekennzeichnet, dass** der Antriebsriemen (8) als Zahnriemen ausgeführt ist.

21. Die Randschneidevorrichtung (1) gemäß Anspruch 1 und Anspruch 7 ist **dadurch gekennzeichnet, dass** die Achse der Randschneidevorrichtung (1) etwas geneigt angebracht ist, so dass die Ebene des rotierenden Nylonfaden des Trimmers nicht parallel zum Erdboden, sondern in einem leichten Winkel zum Erdboden hin geneigt liegt, wodurch die Randschneidevorrichtung (1) in einem sicheren Abstand zum Boden montiert werden kann und **dadurch** bei Fahrten in welligem Gelände nicht am Boden aufsitzen kann.
